# EUROPEAN PATENT APPLICATION

(11) **EP 4 427 912 A1**
(43) Date of publication of application: **11.09.2024**
(21) Application number: 22890010.6
(22) Date of filing: 04.11.2022
(51) Int. Cl.: B29C 64/393, B29C 64/106, B29C 64/245, B33Y 10/00, B33Y 30/00, B33Y 50/02, G01B 21/02

(54) **DIMENSIONAL QUALITY EVALUATION METHOD FOR ADDITIVELY MANUFACTURED OBJECT, AND EVALUATION SYSTEM THEREFOR**

(30) Priority: 04.11.2021 JP 2021180160
(71) Applicant: Proterial, Ltd., Tokyo 135-0061 (JP)
(72) Inventor: PARK, Minseok, Tokyo 100-8280 (JP); OSMA, Steven James, Tokyo 100-8280 (JP); KUWABARA, Kousuke, Tokyo 1350061 (JP); WANG, Jue, Tokyo 1350061 (JP)
(74) Representative: MERH-IP Matias Erny Reichl Hoffmann Patentanwälte PartG mbB
(86) International application number: PCT/JP2022/041118
(87) International publication number: WO 2023/080190

(57) **Abstract**

An object is to provide an evaluation system and an evaluation method that allow easily and accurately evaluating a dimensional quality of an additively manufactured object. A dimensional quality evaluation method for the additively manufactured object includes: a step S1 of additively manufacturing a sample 1 for evaluating the dimensional quality of an additively manufactured object 2 in an additive manufacturing batch same as the additively manufactured object 2 on a baseplate 3 where the additively manufactured object 2 is additively manufactured; a step of acquiring a dimensional difference between a reference portion 11 and a deformation portion 13 of the additively manufactured sample 1; a step S2 of separating the additively manufactured sample 1 from the baseplate 3; a step S3 of measuring a deformation amount of the sample 1 between before and after being separated from the baseplate 3; and a step S4 of evaluating the dimensional quality of the additively manufactured object 2 based on the measured deformation amount of the sample 1. The deformation amount of the sample 1 is a difference value between a dimensional difference between the reference portion 11 and the deformation portion 13 in the sample 1 before being separated and a dimensional difference between the reference portion 11 and the deformation portion 13 in the separated sample 1.

## Description

### Technical Field

The present invention relates to a dimensional quality evaluation method for an additively manufactured object and an evaluation system therefor.

### Background Art

Additive manufacturing (also referred to as additive forming, additive production, or 3D printing) is a processing technique that stacks and combines a manufacturing material, such as resin and metal, in units of small volumes by multiple times and manufactures a three-dimensional object (a manufactured product). The additive manufacturing has a feature that allows manufacturing a manufactured product having a complicated shape, such as having a space inside, at substantially constant time and cost. From this feature, manufacturing a product having a complicated structure that was difficult to be achieved in the conventional processing technique due to limitations of manufacturing time and cost has been advancing using the additive manufacturing. One common feature of additively manufactured objects (hereinafter also referred to as "additively manufactured objects") is having a three-dimensionally intricated, complicated structure to achieve performance higher than that of the conventional products.

While a dimensional quality is one important quality of industrial products, it is important quality especially in an additively manufactured object having a complicated structure and achieving high performance. As a method for evaluating the dimensional quality of the additively manufactured object, a plurality of prior arts have been known.

Patent Literature 1 discloses a technique that preliminarily prepares shapes of a plurality of samples and a shape error measured by manufacturing the plurality of samples, prepares a manufacturing device that allows detecting a shape of a manufactured product during the manufacturing, detects a shape of a product while manufacturing the product by the manufacturing device, compares a design shape of the product and the detected shape of the product with the sample shape and a shape error thereof, and evaluates the shape error of the product. According to the technique disclosed in Patent Literature 1, by evaluating the shape error of the product and changing the next operation of the manufacturing device, further accurate additive manufacturing can be performed.

Patent Literature 2 discloses a technique that performs finite element analysis by a finite element heat-machine model of a manufactured product during additive manufacturing and after the manufacturing, and thus shape distortion and residual stress growth in the manufactured product are predicted. According to the technique disclosed in Patent Literature 2, by introducing a change to the manufactured product before the manufacturing or during the manufacturing, the predicted distortion can be compensated.

Patent Literature 3 discloses a technique that prepares a manufacturing device including a monitor unit that monitors a state of a manufactured product during manufacturing, and monitors a state of a sample for quality management using the monitor unit while manufacturing a product and the sample for quality management by the manufacturing device. The state monitored by the monitor unit includes a temperature, a shape, surface roughness, or a color tone. According to the technique disclosed in Patent Literature 3, by monitoring the state of the sample for quality management during manufacturing and changing the next operation of the manufacturing device based on a monitoring result, a high-quality product can be manufactured.

### Citation List

### Patent Literature

Patent Literature 1: JP 2018-103635 A
Patent Literature 2: JP 2020-114677 A
Patent Literature 3: JP 2021-94775 A

### Summary of Invention

### Technical Problem

The technique disclosed in Patent Literature 1 preliminarily manufactures the plurality of samples and therefore has a problem that takes time and productivity is decreased. Further, the technique disclosed in Patent Literature 1 requires the device having a complicated configuration to accurately detect the shape of the manufactured product during manufacturing and a labor to maintain and manage the accuracy of this device and therefore has a problem that the technique cannot be easily performed.

The technique disclosed in Patent Literature 2 has a problem that the dimensional quality cannot be evaluated considering an influence of a factor not included in the finite element heat-machine model on the dimensional quality. Examples of the factor not included in the finite element heat-machine model include a specification and arrangement of components of the manufacturing device, a component of an atmosphere around the manufactured product during manufacturing and a flow thereof, and a detailed shape of a manufacturing material. Including these factors in the finite element heat-machine model causes a problem that time for the finite element analysis becomes long and productivity decreases. On the other hand, there is a problem that when these factors are not included in the finite element heat-machine model, the change in the dimensional quality due to the influences of these factors cannot be evaluated.

The technique disclosed in Patent Literature 3 requires the device having the complicated configuration to accurately monitor the state of the sample for quality management during manufacturing and a labor to maintain and manage the accuracy of this device, and therefore has a problem that the technique cannot be easily performed.

Thus, without using the device having the complicated configuration and considering the influence of various factors, such as a factor difficult to be included in the finite element heat-machine model, gives to the dimensional quality of the additively manufactured object, achieving a technique that allows easily and accurately evaluating the dimensional quality of the additively manufactured object is desired.

The present invention has been made in consideration of the above-described matters, and an object is to provide an evaluation system and an evaluation method that allow easily and accurately evaluating a dimensional quality of an additively manufactured object.

### Solution to Problem

To solve the problem, a dimensional quality evaluation method for an additively manufactured object of the present invention evaluates a dimensional quality of the additively manufactured object additively manufactured on a baseplate. The dimensional quality evaluation method comprises: a step of additively manufacturing a sample for evaluating the dimensional quality of the additively manufactured object in an additive manufacturing batch same as the additively manufactured object on the baseplate where the additively manufactured object is additively manufactured; a step of acquiring a dimensional difference between a reference portion and a deformation portion of the additively manufactured sample; a step of separating the additively manufactured sample from the baseplate; a step of measuring a dimension of the separated sample to measure a deformation amount of the sample between before and after being separated from the baseplate; and a step of evaluating the dimensional quality of the additively manufactured object based on the measured deformation amount of the sample. The deformation amount of the sample is a difference value between a dimensional difference between the reference portion and the deformation portion in the sample before being separated and a dimensional difference between the reference portion and the deformation portion in the separated sample.

### Advantageous Effects of Invention

According to the present invention, the evaluation method and the evaluation system that allow easily and accurately evaluating the dimensional quality of the additively manufactured object can be provided.

Problems, configurations, and effects other than ones described above will be clarified in the following explanation of embodiments.

### Brief Description of Drawings

Fig. 1 is a drawing depicting a whole step of a dimensional quality evaluation method of Embodiment 1.
Fig. 2(a) is a side view illustrating states of samples and products after terminating additive manufacturing. Fig. 2(b) is a top view of the state illustrated in Fig. 2(a).
Fig. 3(a) is a perspective view illustrating a shape of the sample illustrated in Fig. 2(a) and Fig. 2(b). Fig. 3(b) is a top view of the sample illustrated in Fig. 3(a). Fig. 3(c) is a side view of the sample illustrated in Fig. 3(a). Fig. 3(d) is a side view of the sample viewed in a direction different from Fig. 3(c).
Fig. 4(a) is a side view illustrating a state of placing a baseplate before a comb teeth specimen is separated on a measurement stage. Fig. 4(b) is a side view illustrating a state of placing the comb teeth specimen separated from the baseplate on the measurement stage. Fig. 4(c) is a side view illustrating a state of placing a comb teeth specimen having a shape different from Fig. 4(b) on the measurement stage.
Fig. 5 is a side view illustrating a state of placing the sample separated from the baseplate on the measurement stage.
Fig. 6 is a drawing describing a modification of a reference portion.
Fig. 7(a) is a drawing describing a modification of the sample. Fig. 7(b) is a drawing describing a modification of the sample different from Fig. 7(a). Fig. 7(c) is a drawing describing a modification of the sample different from Fig. 7(a) and Fig. 7(b).
Fig. 8(a) is a drawing describing a modification of support portion of a deformation portion. Fig. 8(b) is a drawing describing a modification of the support portion different from Fig. 8(a). Fig. 8(c) is a drawing describing a modification of the support portion different from Fig. 8(a) and Fig. 8(b).
Fig. 9 is a drawing illustrating a measurement device that measures a deformation amount of the sample.
Fig. 10 is a drawing illustrating a dimensional quality determination table of Embodiment 1.
Fig. 11 is a drawing illustrating a configuration of a dimensional quality evaluation system of Embodiment 1.
Fig. 12 is a drawing illustrating an example of a screen displayed on a terminal illustrated in Fig. 11.
Fig. 13 is a drawing depicting a whole step of a dimensional quality evaluation method of Embodiment 2.
Fig. 14 is a drawing illustrating an example of a correlation model.
Fig. 15 is a drawing describing a method of establishing the correlation model illustrated in Fig. 14.
Fig. 16 is a drawing illustrating a dimensional quality determination table of Embodiment 2.
Fig. 17 is a drawing illustrating a dimensional quality determination table different from Fig. 16.
Fig. 18 is a drawing illustrating an example of a screen displayed on the terminal of Embodiment 2.

### Description of Embodiments

The following describes embodiments of the present invention with reference to the drawings. Configurations to which the same reference numerals are attached in the respective embodiments have similar functions in the respective embodiments insofar as they are not especially mentioned, and their explanations will be omitted.

### [Embodiment 1]

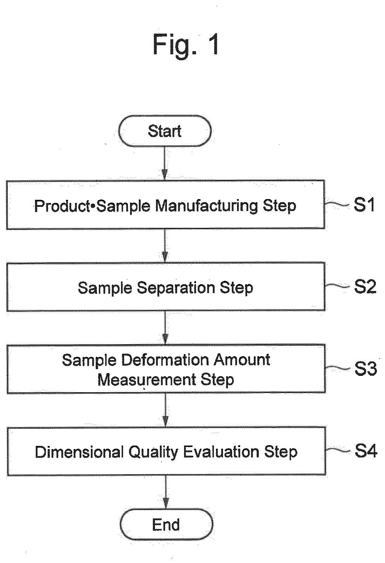

Using Fig. 1 to Fig. 12, a dimensional quality evaluation method for an additively manufactured object and an evaluation system therefor according to Embodiment 1 are described.

Fig. 1 is a drawing depicting a whole step of the dimensional quality evaluation method of Embodiment 1,

The dimensional quality evaluation method of this embodiment is a method that evaluates a dimensional quality of an additively manufactured object 2 (hereinafter also referred to as a "product 2") additively manufactured on a baseplate 3. This dimensional quality evaluation method includes: a step S1 of additively manufacturing a deformation measurement sample 1 (hereinafter also referred to as a "sample 1") for evaluating the dimensional quality of the product 2 and the product 2; a step S2 of separating the additively manufactured sample 1 from the baseplate 3; a step S3 of measuring a dimension of the separated sample 1 to measure a deformation amount of the sample 1 between before and after separation from the baseplate 3; and a step S4 of evaluating a dimensional quality of an additive manufacturing batch based on the measured deformation amount of the sample 1.

That is, at the step S1, the sample 1 is simultaneously additively manufactured with the product 2 on the baseplate 3 where the product 2 is additively manufactured. The additive manufacturing batch at the step S4 means a group of manufactured products manufactured in the same additive manufacturing batch and includes one or a plurality of the products 2 and the samples 1. That is, at the step S4, the dimensional quality of the additive manufacturing batch is evaluated based on the measured deformation amount of the sample 1 to evaluate the dimensional quality of the product 2.

### <Step S1 and Sample 1>

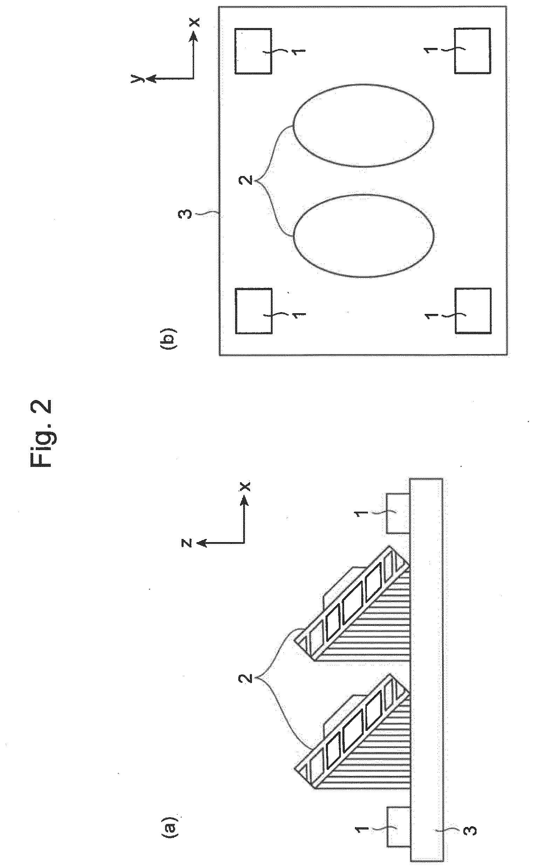

Fig. 2(a) is a side view illustrating states of samples 1 and products 2 after terminating the additive manufacturing. Fig. 2(b) is a top view of the state illustrated in Fig. 2(a).

On the baseplate 3 where the product 2 is additively manufactured, the sample 1 disposed at a position not in contact with the product 2 is manufactured simultaneously with the product 2. Further, the arrangement of the sample 1 is preferably disposed such that only the sample 1 can be separated from the baseplate 3 without separating the product 2 from the baseplate 3. For example, as illustrated in Fig. 2(b), by disposing the samples 1 on four corners of the baseplate, only the samples 1 can be separated from the baseplate 3 without separating the products 2 from the baseplate 3. However, Fig. 2(b) is one example, and the number of the samples 1 additively manufactured simultaneously with the products 2 is not limited to four.

First, the sample 1 and the product 2 are additively manufactured using a manufacturing device that solidifies a manufacturing material melted on the baseplate 3, and afterward repeats solidifying the manufacturing material further melted on the solidified manufacturing material. The manufacturing device includes, for example, an additive manufacturing device with a Powder-in-Bed method, and it is the well-known technique for those skilled in the art, and therefore the description is omitted. The baseplate 3 is disposed substantially parallel to an xy plane (for example, a horizontal surface). As the additive manufacturing progresses, the sample 1 and the product 2 are stacked layer by layer starting from an upper surface of the baseplate 3 along an +z-axis direction (an upper direction).

In this embodiment, although the description is given with an example of the dimensional quality evaluation method that evaluates the dimensional quality of the product 2 additively manufactured by the additive manufacturing device with the Powder-in-Bed method and the evaluation system therefor, the present invention is widely applicable to a product (an additively manufactured object) additively manufactured by an additive manufacturing device with other than the Powder-in-Bed method.

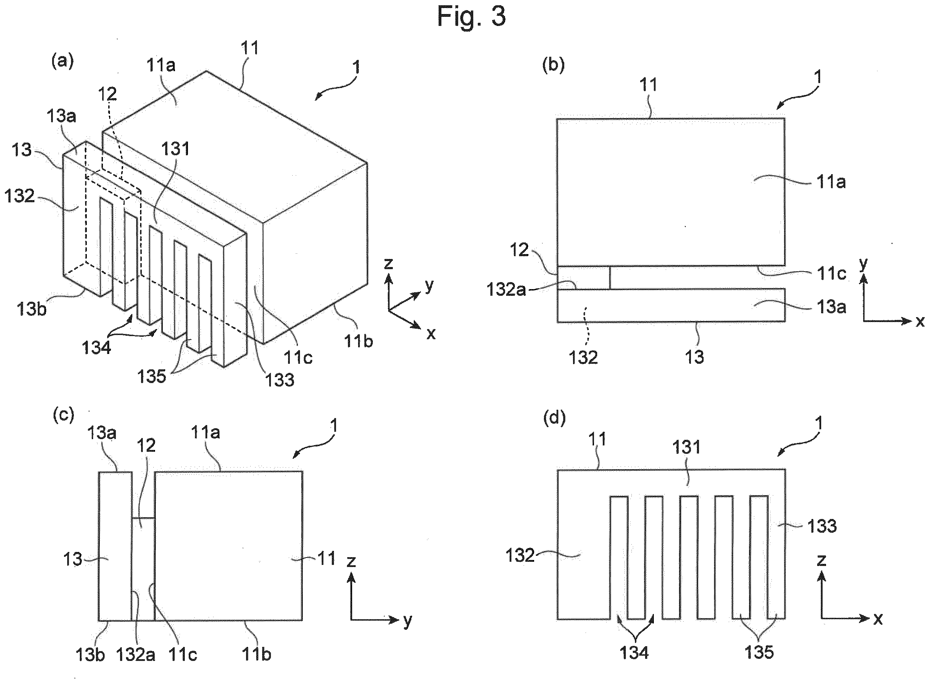

Fig. 3(a) is a perspective view illustrating a shape of the sample 1 illustrated in Fig. 2(a) and Fig. 2(b). Fig. 3(b) is a top view of the sample 1 illustrated in Fig. 3(a). Fig. 3(c) is a side view of the sample 1 illustrated in Fig. 3(a). Fig. 3(d) is a side view of the sample 1 viewed in a direction different from Fig. 3(c).

The sample 1 includes a reference portion 11 serving as a reference for measuring the dimension of the sample 1, a deformation portion 13 coupled to the reference portion 11, and a coupling portion 12 that couples the reference portion 11 and the deformation portion 13.

The reference portion 11 forms a block body with a flat surface (that is, no ups and downs or unevenness on the surface). As illustrated in Fig. 3(a), the reference portion 11, for example, forms a hexahedron, such as a rectangular parallelepiped shape. An upper surface 11a of the reference portion 11 is additively manufactured to be substantially parallel to the baseplate 3. A side surface 11c of the reference portion 11 is additively manufactured to be substantially perpendicular to the baseplate 3. A bottom surface 11b of the reference portion 11 is additively manufactured on the baseplate 3 to be in contact with the baseplate 3.

The deformation portion 13 is disposed at a side of the reference portion 11. An upper surface 13a of the deformation portion 13 is additively manufactured at a height substantially the same as the upper surface 11a of the reference portion 11. Specifically, the upper surface 13a of the deformation portion 13 is additively manufactured such that the height from the baseplate 3 (or the bottom surface 13b) becomes substantially the same as the height of. the upper surface 11a of the reference portion 11 from the baseplate 3 (or the bottom surface 11b). The upper surface 13a of the deformation portion 13 is additively manufactured to have an area smaller than the upper surface 11a of the reference portion 11.

The deformation portion 13 illustrated in Fig. 3(a) to Fig. 3(d) includes a beam portion 131, a column portion 132, and a support portion 133. After termination of the additive manufacturing of the sample 1 and the product 2 (after the step S1 and before the step S2), the column portion 132 extends upward from the baseplate 3. The beam portion 131 projects from a distal end portion of the column portion 132 along the baseplate 3 and extends substantially parallel to the baseplate 3. The support portion 133 extends downward from the beam portion 131 to the baseplate 3 and supports the beam portion 131. The support portion 133 has voids 134 that communicate the beam portion 131 and the baseplate 3. A side surface 132a of the column portion 132 is coupled to the side surface 11c of the reference portion 11 by the coupling portion 12.

The deformation portion 13 illustrated in Fig. 3(a) to Fig. 3(d) includes the support portion 133 having a shape similar to a comb teeth specimen C for comparison with a comb teeth specimen (a cantilever sample) C conventionally known in the field of additive manufacturing. The support portion 133 has a structure in which a plurality of plate-shaped members 135 extending in an up-down direction (a z-axis direction) are disposed to be separated from one another in a direction along the baseplate 3. The voids 134 are formed between these plurality of plate-shaped members 135. That is, viewing only the deformation portion 13 illustrated in Fig. 3(a) to Fig. 3(d), the deformation portion 13 has a shape similar to the shape known as comb teeth specimen C. However, the shape of the sample 1 in which the deformation portion 13 is coupled to the reference portion 11 by the coupling portion 12 and integrated is not known.

By the use of the sample 1 in which the reference portion 11 and the deformation portion 13 are coupled, the dimensional quality evaluation method of this embodiment allows easily and accurately measuring the deformation amount of the sample 1 even when the sample 1 and the product 2 are simultaneously additively manufactured on the same baseplate 3. To describe the principle, the following first describes deformation of the manufactured product in the additive manufacturing and after that describes effects of the use of the sample 1 compared with the conventional comb teeth specimen C.

It is known that, in the additive manufacturing of repeatedly melting and solidifying the manufacturing materials on the baseplate 3 substantially parallel to the xy plane and stacking the manufacturing materials layer by layer along a +z-axis direction (upward), in the manufactured product, such as the product 2 and the sample 1, thermal stress is generated by repeating heating and cooling. Specifically, when an uppermost surface of the manufactured product to which the manufacturing material melted by stacking is added becomes a high temperature and heat energy relatively moves from the uppermost surface having the high temperature to the baseplate 3 having a low temperature by heat conduction, the uppermost surface is cooled. By repeating thermal expansion and contraction of the manufactured product through these heating and cooling, the thermal stress is generated. The more temperature history inside the manufactured product is nonuniform, the larger a magnitude of the thermal stress becomes, and a direction of the thermal stress is a direction of contracting an upper portion of the manufactured product and expanding a lower portion thereof. When the upper portion contracts and the lower portion expands, upward warpage occurs as a result, and therefore the manufactured product basically warps to deform. However, with the manufactured product before being separated from the baseplate 3, since the deformation is dynamically restrained by joining with the upper surface of the baseplate 3, the deformation amount remains within a minute range, and the thermal stress remains within the manufactured product as residual stress. However, when the manufactured product is separated from the baseplate 3, the manufactured product deforms so as to warp comparatively largely by the residual stress.

In this embodiment, the deformation amount of the sample 1 is the deformation amount of the sample 1 when the sample 1 warps to deform by separating the additively manufactured sample 1 from the baseplate 3. That is, the deformation amount of the sample 1 is the deformation amount of the sample 1 between before and after the separation of the additively manufactured sample 1 from the baseplate 3. The deformation amount of the product 2 is the deformation amount of the product 2 when the product 2 warps to deform by separating the additively manufactured object 2 from the baseplate 3. That is, the deformation amount of the product 2 is the deformation amount of the product 2 between before and after the separation of the additively manufactured object 2 from the baseplate 3. The deformation amount of the sample 1 or the product 2 can be interpreted as an amount of dimensional change from a design shape of the sample 1 or the product 2.

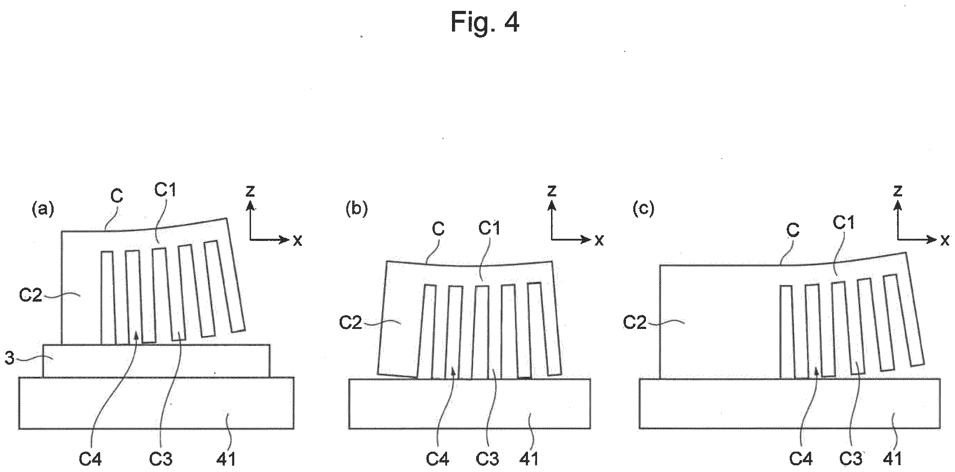

Next, the comb teeth specimen C illustrated in Fig. 4 is a specimen for measuring the deformation amount using characteristics of thermal distortion in the above-described additive manufacturing. The beam portion C1 extending substantially parallel to the xy plane is connected to the baseplate 3 by a column portion C2 and a comb-shaped support portion C3 extending along the z-axis. Since the support portion C3 has voids C4, a coefficient of heat transfer between the beam portion C1 and the baseplate 3 changes depending on a position inside the beam portion C1. This increases non-uniformity of the temperature history (the hysteresis) at the inside of the beam portion C1, and the thermal stress generated in the beam portion C1 increases. After terminating the additive manufacturing, when the support portion C3 is cut from the baseplate 3, the beam portion C1 losing the dynamical restrain with the baseplate 3 significantly warps to deform. Accordingly, in the conventional comb teeth specimen C, to accurately measure the deformation amount, the column portion C2 was not able to be separated from the baseplate 3. The reason will be described with reference to Fig. 4(a) to Fig. 4(c).

Fig. 4(a) is a side view illustrating a state of placing the baseplate 3 before the comb teeth specimen C is separated on a measurement stage 41. Fig. 4(b) is a side view illustrating a state of placing the comb teeth specimen C separated from the baseplate 3 on the measurement stage 41. Fig. 4(c) is a side view illustrating a state of placing the comb teeth specimen C having a shape different from Fig. 4(b) on the measurement stage 41.

In Fig. 4(a), on the measurement stage 41 for measuring the deformation amount, the baseplate 3 to which the comb teeth specimen C is connected is placed. The use of the flat baseplate 3 having the uniform thickness allows accurately measuring the deformation amount of warpage of the beam portion C1 at the upper portion of the comb teeth specimen C. Although the baseplate 3 possibly deforms by the additive manufacturing, since the deformation amount of the baseplate 3 is sufficiently small compared with the deformation amount of the comb teeth specimen C, it can be actually ignored.

In Fig. 4(b), on the measurement stage 41, the comb teeth specimen C separated from the baseplate 3 is placed. Due to the warpage and the deformation, a bottom surface of the column portion C2 and a bottom surface of the support portion C3 cannot exist on the same plane. As in Fig. 4(b), only a part of the bottom surface of the column portion C2 and a part of the bottom surface of the support portion C3 are in contact with the measurement stage 41. Thus, the comb teeth specimen C rotates inside the zx plane and it is difficult to accurately measure the deformation amount of warpage of the beam portion C1 at the upper portion of the comb teeth specimen C.

In Fig. 4(c), on the measurement stage 41, the comb teeth specimen C having a volume ratio of the column portion C2 to the support portion C3 is larger than that in Fig. 4(b) is placed. In view of this, the comb teeth specimen C illustrated in Fig. 4(c) can suppress the rotation in the zx plane generated in the case of Fig. 4(b). However, when the bottom surface of the column portion C2 separated from the baseplate 3 is not parallel to the xy plane (that is, not parallel to the baseplate 3), the bottom surface of the column portion C2 is inclined with respect to the measurement stage 41 substantially parallel to the xy plane. In association with the inclination, since the beam portion C1 at the upper portion of the comb teeth specimen C placed on the measurement stage 41 is also inclined, accurately measuring the deformation amount of warpage of the beam portion C1 is difficult.

Due to the above-described reason, to accurately measure the deformation amount of the comb teeth specimen C, as illustrated in Fig. 4(a), in the conventional comb teeth specimen C, the deformation amount was required to be measured in a state of the comb teeth specimen C being connected to the baseplate 3 without separating the column portion C2 from the baseplate 3. However, meanwhile, to simultaneously additively manufacture the comb teeth specimen C and the product 2, the baseplate 3 larger than the measurement stage 41 needs to be used. Under the situation, to accurately measure the deformation amount of the comb teeth specimen C, a part of the baseplate 3 on which the comb teeth specimen C is placed need to be cut from the baseplate 3. That is, for the comb teeth specimen C and the product 2 being additively manufactured simultaneously and the deformation amount of the comb teeth specimen C being accurately measured, a complicated step of cutting the baseplate 3 is generated each time. Further, since the use of the baseplate 3 after cutting for additive manufacturing again is difficult, a labor and cost of disposing of the baseplate 3 are generated. Thus, it was actually difficult to additively manufacture the conventional comb teeth specimen C and the product 2 simultaneously and accurately measure the deformation amount of the comb teeth specimen C.

In contrast to this, with the sample 1 according to this embodiment, even when not only the support portion 133 but also the column portion 132 is completely separated from the baseplate 3, as described below, the deformation amount of warpage of the beam portion 131 can be accurately measured.

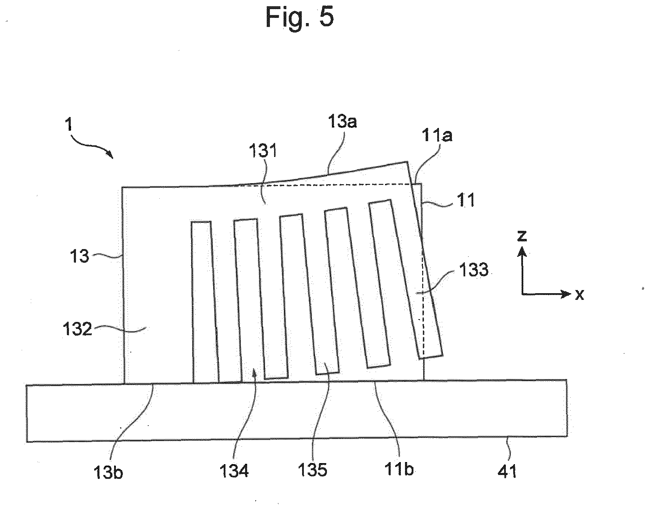

Fig. 5 is a side view illustrating a state of placing the sample 1 separated from the baseplate 3 on the measurement stage 41.

Similarly to the comb teeth specimen C illustrated in Fig. 4(a) to Fig. 4(c), the deformation portion 13 of the sample 1 deforms such that the beam portion 131 at the upper portion of the deformation portion 13 warps. However, unlike the comb teeth specimen C illustrated in Fig. 4(b), even when the deformation portion 13 is completely separated from the baseplate 3, the rotation in the zx plane can be ignored. This is because the deformation portion 13 is coupled to the reference portion 11 by the coupling portion 12.

The reference portion 11 of the sample 1 has an area of the bottom surface 11b in contact with the baseplate 3 larger than an area of the bottom surface 13b of the deformation portion 13. Additionally, as illustrated in Fig. 3(b), the deformation portion 13 is disposed at a side of the reference portion 11 and coupled to the reference portion 11 via the coupling portion 12. Accordingly, the sample 1 can be placed on the measurement stage 41 without falling.

Since the reference portion 11 has the surface forming the flat block body, the deformation amount of the reference portion 11 can be ignored compared with the deformation amount of the deformation portion 13. This is because of the following two reasons. First, the coefficient of heat transfer between the reference portion 11 and the baseplate 3 is substantially constant regardless of the position inside the reference portion 11. This is because the temperature history becomes substantially uniform inside the reference portion 11 and the thermal stress generated in the reference portion 11 decreases. Second, a thickness of the reference portion 11 in the z-axis direction (the up-down direction) is thicker than a thickness of the beam portion 131 in the z-axis direction. This is because the reference portion 11 is less likely to deform compared with the beam portion 131 in terms of mechanics (rigidity is high).

Additionally, when the bottom surface 11b of the reference portion 11 separated from the baseplate 3 is not parallel to the xy plane, the sample 1 placed on the measurement stage 41 is inclined. However, since the area of the upper surface 11a of the reference portion 11 is larger than the area of the upper surface 13a of the deformation portion 13 (the beam portion 131), the large number of measurement points of the height of the upper surface 11a can be disposed on the upper surface 11a. Thus, the height of the upper surface 11a of the reference portion 11 is measured at the many measurement points, and therefore the measurement accuracy increases. It is possible to calculate the inclination of the sample 1 from further many measurement data and estimate a measurement error of the height in the upper surface 13a of the beam portion 131 using the calculated inclination. Accordingly, using the inferred measurement error, the deformation amount of warpage of the beam portion 131 can be accurately corrected.

With the action of the reference portion 11 as described above, according to the sample 1 of this embodiment, even when not only the support portion 133 but also the column portion 132 is completely separated from the baseplate 3, the deformation amount of warpage of the beam portion 131 can be accurately measured. Thus, with the dimensional quality evaluation method of this embodiment, after the sample 1 is additively manufactured simultaneously with the product 2, the sample 1 can be separated from the baseplate 3 and the deformation amount of the sample 1 can be accurately measured. The dimensional quality evaluation method of this embodiment eliminates the need for cutting the baseplate 3 itself unlike the conventional method of using the comb teeth specimen C, and therefore a complicated step of cutting the baseplate 3 or the labor and the cost of disposing of the baseplate 3 does not occur. Accordingly, since the dimensional quality evaluation method of this embodiment allows simultaneously manufacturing the sample 1 and the product 2 and accurately measuring the deformation amount of the sample 1, the dimensional quality of the additively manufactured object can be easily and accurately evaluated.

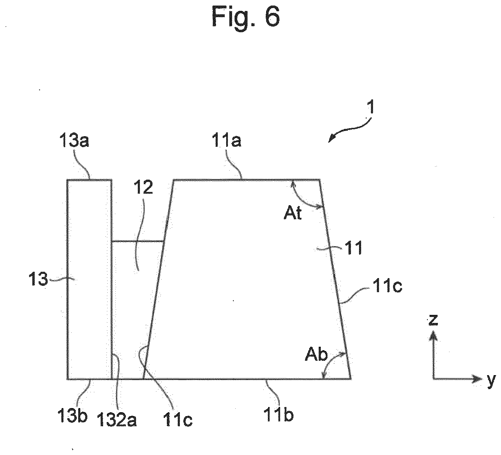

Fig. 6 is a drawing describing a modification of the reference portion 11.

As illustrated in Fig. 6, the reference portion 11 may have an angle At formed by the upper surface 11a and the side surface 11c in a cross-sectional surface of the reference portion 11 of 90 degrees or more, and an angle Ab formed by the bottom surface 11b and the side surface 11c of the reference portion 11 in the cross-sectional surface of 90 degrees or less. Thus, in the middle of the additive manufacturing of the reference portion 11, a cross-sectional area of a heat conduction path from the stacked uppermost surface to the baseplate 3, that is, an xy cross-sectional area of a manufactured part that is already present below the uppermost surface, is possibly a cross-sectional area of the uppermost surface or more. The heat conduction path allows suppressing an abnormally high temperature of the uppermost surface of the reference portion 11 entirely or locally. It has been known that the abnormally high temperature of the uppermost surface deteriorates flatness of the upper surface 11a of the reference portion 11 after cooling. Accordingly, the angle At of 90 degrees or more and the angle Ab of 90 degrees or less bring an effect of proper flatness of the upper surface 11a of the reference portion 11 and allow accurately measuring the deformation amount of the sample 1. That is, the cross-sectional surface of the reference portion 11 preferably has a trapezoidal shape or a rectangular shape.

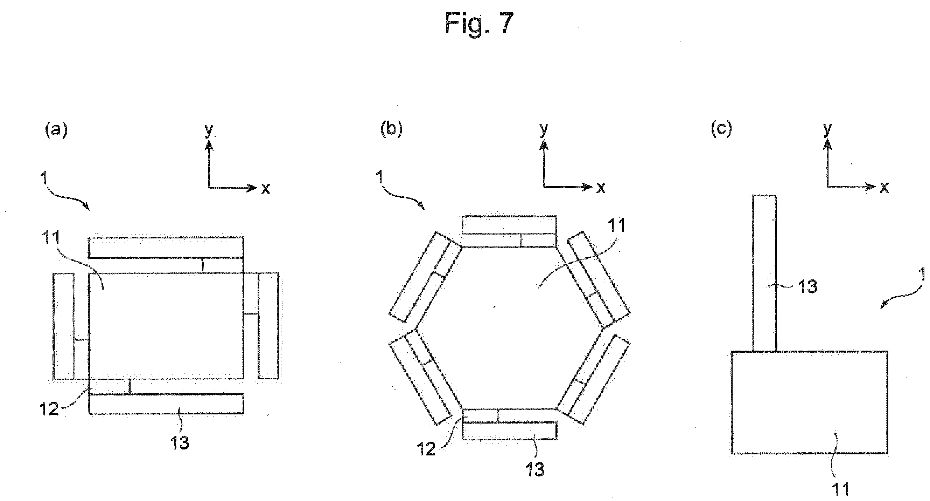

Fig. 7 is a drawing describing a modification of the sample 1. Fig. 7(a) is a drawing describing the modification of the sample 1. Fig. 7(b) is a drawing describing a modification of the sample 1 different from Fig. 7(a). Fig. 7(c) is a drawing describing a modification of the sample 1 different from Fig. 7(a) and Fig. 7(b).

As illustrated in Fig. 7(a), with the sample 1, a plurality of the deformation portions 13 may be coupled to one reference portion 11. As illustrated in Fig. 7(b), with the sample 1, the reference portion 11 does not the hexahedron but may be a block body, such as a hexagonal- prism.

As illustrated in Fig. 7(c), the sample 1 may have a shape in which the deformation portion 13 projects from the reference portion 11. The column portion 132 of the deformation portion 13 may be disposed separately from the reference portion 11. Alternatively, the reference portion 11 may double as the column portion 132 and the beam portion 131 may extend from the reference portion 11. In this case, a difference between the sample 1 illustrated in Fig. 7(c) and the comb teeth specimen C illustrated in Fig. 4(c) is that, in the sample 1 illustrated in Fig. 7(c), a width of the reference portion 11 along a direction substantially perpendicular to the extending direction of the beam portion 131 (a length in an x-axis direction of Fig. 7(c)) is sufficiently larger a width of the beam portion 131. In the comb teeth specimen C illustrated in Fig. 4(c), a width (a length in a y-axis direction in Fig. 4(c)) of the column portion C2 is substantially the same size as the width of the beam portion C1. By increasing the width of the reference portion 11 larger than the width of the beam portion 131, with the sample 1 illustrated in Fig. 7(c), the area of the upper surface 11a of the reference portion 11 can be larger than the area of the upper surface 13a of the deformation portion 13 (the beam portion 131). In view of this, with the sample 1 illustrated in Fig. 7(c), even when the bottom surface 11b of the reference portion 11 is not parallel to the xy plane, from the inclination of the sample 1 calculated from many pieces of the measurement data in the upper surface 11a of the reference portion 11, the measurement error of the height of the upper surface 13a of the beam portion 131 can be estimated and the deformation amount of warpage of the beam portion 131 can be corrected.

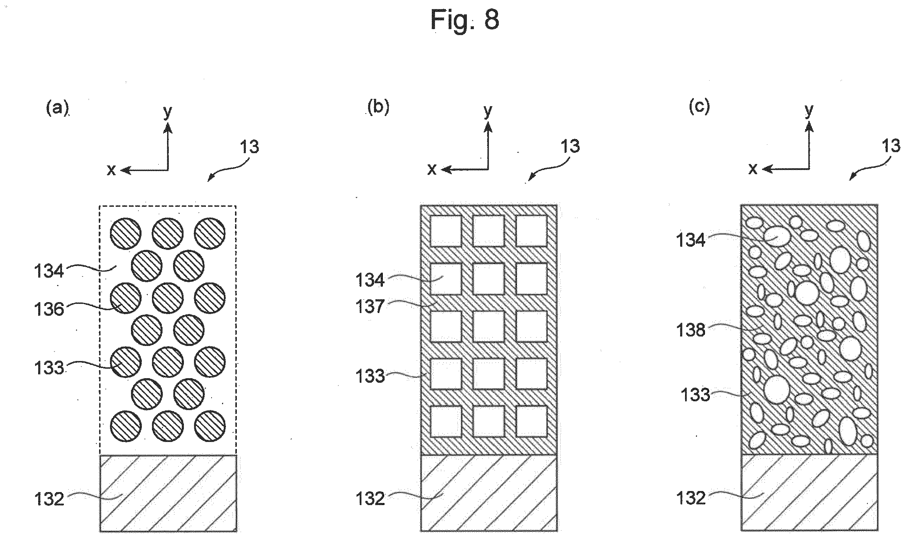

Fig. 8 is a drawing describing a modification of the deformation portion 13. Fig. 8(a) is a drawing describing a modification of the support portion 133 of the deformation portion 13. Fig. 8(b) is a drawing describing a modification of the support portion 133 different from Fig. 8(a). Fig. 8(c) is a drawing describing a modification of the support portion 133 different from Fig. 8(a) and Fig. 8(b). Fig. 8(a) to Fig. 8(c) illustrate a cross-sectional view taken along the deformation portion 13 along an xy plane passing through the column portion 132 and the support portion 133.

The support portion 133 illustrated in Fig. 3(a) to Fig. 3(d) have a structure in which the plurality of plate-shaped members 135 extending in the up-down direction are disposed to be separated from one another in the direction along the baseplate 3. However, it is only necessary that the support portion 133 of this embodiment extends downward from the beam portion 131 to the baseplate 3 and supports the beam portion 131 and has the voids 134 that communicate the beam portion 131 and the baseplate 3. By the support portion 133 having the voids 134, the coefficient of heat transfer between the beam portion 131 and the baseplate 3 changes according to the position inside the beam portion 131.

For example, as illustrated in Fig. 8(a), the support portion 133 may have a structure in which a plurality of rod-shaped members 136 extending in the up-down direction are disposed to be separated from one another and the voids 134 are formed between the plurality of rod-shaped members 136. Additionally, as illustrated in Fig. 8(b), the support portion 133 may have a structure constituted by a mesh-like member 137 internally having the voids 134. Additionally, as illustrated in Fig. 8(c), the support portion 133 may have a structure constituted by a porous member 138 internally having the voids 134.

### <Step S2>

At the step S2 of separating the additively manufactured sample 1 from the baseplate 3, after terminating the additive manufacturing of the sample 1 and the product 2, the additively manufactured sample 1 is separated from the baseplate 3. As the method for separating the sample 1 from the baseplate 3, for example, various methods, such as wire discharge machining or laser cutting, can be used.

### <Step S3>

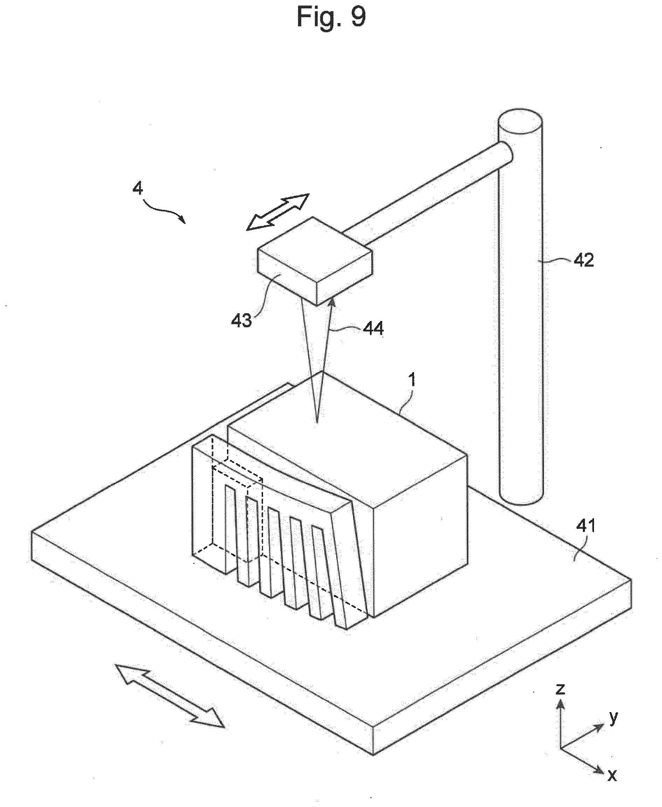

Fig. 9 is a drawing illustrating a measurement device 4 that measures the deformation amount of the sample 1.

At the step S3 of measuring the deformation amount of the sample 1, the dimension of the sample 1 separated from the baseplate 3 is measured and the deformation amount of the sample 1 is measured. In the step S3, to measure the deformation amount of the sample 1 is to measure a difference value between the dimension of the reference portion 11 and the dimension of the deformation portion 13 in the separated sample 1. Specifically, at the step S3, to measure the deformation amount of the sample 1 is to measure the difference value between the height of the upper surface 11a of the reference portion 11 and the height of the upper surface 13a of the deformation portion 13 in the separated sample 1.

In the measurement device 4 illustrated in Fig. 9, a laser displacement sensor 43 supported by a sensor support portion 42 is disposed upward the sample 1 placed on the measurement stage 41. The laser displacement sensor 43 irradiates the sample 1 disposed downward the laser displacement sensor 43 with laser light 44 and receives the laser light 44 reflected by the sample 1 to measure the height at the measurement point irradiated with the laser light 44 of the sample 1. The laser displacement sensor 43 is movable in the y-axis direction, and the measurement stage 41 is movable in the x-axis direction. Thus, the laser displacement sensor 43 can easily measure the relative height from a reference surface at the plurality of measurement points in the upper surface 11a of the reference portion 11 and the upper surface 13a of the deformation portion 13. The height in the upper surface 11a of the reference portion 11 and the upper surface 13a of the deformation portion 13 from a measurement signal can be easily obtained by the well-known signal processing and data processing techniques. This data processing technique includes a technique of calculating the inclination of the sample 1 from the measurement data of the height of the upper surface 11a of the reference portion 11. Further, this data processing technique includes a technique of calculating a variation value ze of a height generated at the measurement point of the upper surface 13a of the deformation portion 13 from the calculated inclination. Further, this data processing technique includes a correction technique of using a value (z' - ze) found by subtracting the calculated variation value ze from measurement data z' of the height at the measurement point of the deformation portion 13 as a measurement value of the height at the measurement point of the deformation portion 13. Note that Fig. 9 exemplifies the measurement device 4 using the laser displacement sensor 43, but the measurement device 4 may be a measurement device using the method other than the laser displacement sensor 43.

With the method, at the step S3, the height of the upper surface 11a of the reference portion 11 and the height of the upper surface 13a of the deformation portion 13 in the separated sample 1 are measured. At the step S3, the measurement value of the height of the upper surface 11a of the reference portion 11 is subtracted from the measurement value of the height of the upper surface 13a of the deformation portion 13. Thus, at the step S3, the difference value between the height of the upper surface 11a of the reference portion 11 and the height of the upper surface 13a of the deformation portion 13 can be acquired.

### <Step S4>

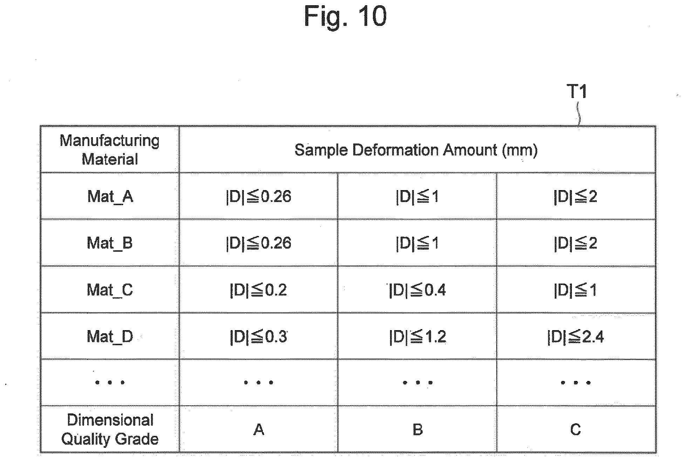

Fig. 10 is a drawing illustrating a dimensional quality determination table T1 of Embodiment 1.

At the step S4, based on the measured deformation amount of the sample 1, the dimensional quality of the additive manufacturing batch including the sample 1 is evaluated. At the step S4, the dimensional quality of the additive manufacturing batch including the sample 1 is evaluated to evaluate the dimensional quality of the product 2 included in the additive manufacturing batch.

Specifically, at the step S4, using the dimensional quality determination table T1 illustrated in Fig. 10, a grade of the dimensional quality of the additive manufacturing batch is determined to evaluate the dimensional quality of the product 2 included in the additive manufacturing batch. The dimensional quality determination table T1 is a table that determines a correspondence relationship between a kind of the manufacturing material used for the additive manufacturing batch, the deformation amount of the sample 1 included in the additive manufacturing batch, and the grade of the dimensional quality of the additive manufacturing batch. For example, it is assumed that, in an additive manufacturing batch in which a manufacturing material A is used, the deformation amount of the sample 1 included in the batch is 0.3 mm. At this time, since the deformation amount of the sample 1 is larger than 0.26 mm and 1 mm or less, at the step S4, the grade of the dimensional quality of the additive manufacturing batch is determined as B and the grade of the dimensional quality of the product 2 is determined as B. In the dimensional quality determination table T1, the deformation amount of the sample 1 as a determination reference of the grade of the dimensional quality may be a value preliminarily determined by a user. Additionally, the deformation amount of the sample 1 as the determination reference of the grade of the dimensional quality can be determined by a human or a computer based on deformation amount of a plurality of the samples 1.

Note that at the step S4, without using the dimensional quality determination table T1, the dimensional quality of the additive manufacturing batch (namely, the product 2) may be evaluated. For example, at the step S4, the measured deformation amount of the sample 1 may be scored, not the grade of the dimensional quality, to evaluate the dimensional quality.

The dimensional quality evaluation method of this embodiment evaluates the dimensional quality of the additive manufacturing batch including the sample 1 based on the deformation amount of the sample 1 to allow evaluating the dimensional quality of the product 2. To evaluate the dimensional quality of the product 2, considering an influence on the dimensional quality by the design shape of the product 2, and an influence on the dimensional quality by a factor other than the design shape of the product 2 are preferred. The influence on the dimensional quality by the design shape of the product 2 is comparatively easily understood. For example, since the deformation amount of the product 2 having an elongate shape is likely to be larger than the deformation amount of the product 2 having a thick and short shape, the dimensional quality of the product 2 having the elongate shape is likely to be lower than the dimensional quality of the product 2 having the thick and short shape. Examples of the factor other than the design shape of the product 2 that affects the dimensional quality include a difference in a manufacturing condition, a manufacturing device, and the manufacturing material. The difference in the manufacturing condition is, for example, a difference in various parameters set to the manufacturing device. The difference in the manufacturing device includes, in addition to an individual difference of the manufacturing device, a difference due to secular change in one manufacturing device. The difference in the manufacturing material includes, in addition to a difference in a chemical composition of the material, a difference in a shape of the material. In the case of, for example, a powdery material, the difference in the shape of the material is a difference in a size or sphericity (a degree close to a perfect sphere) of the powder. In the case of a filament-shaped material, for example, the difference in the shape of the material also includes a thickness of the filament. The dimensional quality of the product 2 is affected by the factor of the design shape of the product 2 in complex with the factor other than the design shape. However, actually, the factor other than the design shape of the product 2 that influences on the dimensional quality is generally complicated and difficult to be predicted.

Therefore, by the dimensional quality evaluation method of this embodiment evaluating the dimensional quality of the additive manufacturing batch including the sample 1 based on the deformation amount of the sample 1, even with the comparatively simple method, considering the influence on the dimensional quality by the factor other than the design shape of the product 2, the dimensional quality of the product 2 can be evaluated. Accordingly, the dimensional quality evaluation method of this embodiment allows easily and accurately evaluating the dimensional quality of the additively manufactured object.

The evaluation result of the dimensional quality of this embodiment can be used, for example, when the product 2 having a similar design is additively manufactured and the dimensional quality is evaluated. That is, first, the dimension qualities of both the product 2 and the sample 1 are evaluated, and thereafter, according to the evaluation result of the dimensional quality of the sample 1, the dimensional quality of the product 2 can be evaluated. Additionally, the evaluation result of the dimensional quality of this embodiment can be used for state monitoring and state improvement of the manufacturing condition, the manufacturing device, the manufacturing material, and the like. By examining these factors in detail, further simple state monitoring and state improvement are possible. Additionally, when a designer of the product 2 is different from a person who manufactured and the dimensional quality of the product,2 is insufficient, the evaluation result of the dimensional quality of this embodiment can be used for finding out the cause and clarifying locus of responsibility and countermeasure.

As described above, the dimensional quality evaluation method of this embodiment is a method that evaluates the dimensional quality of the product 2 additively manufactured on the baseplate 3. The dimensional quality evaluation method includes additively manufacturing the sample 1 for evaluating the dimensional quality of the product 2 simultaneously with the product 2 on the baseplate 3 where the product 2 is additively manufactured (that is, the same additive manufacturing batch) (the step S1). The dimensional quality evaluation method includes separating the additively manufactured sample 1 from the baseplate 3 (the step S2). The dimensional quality evaluation method includes measuring the dimension of the separated sample 1 to measure the deformation amount of the sample 1 between before and after the separation from the baseplate 3 (the step S3). The dimensional quality evaluation method includes evaluating the dimensional quality of the product 2 based on the measured deformation amount of the sample 1 (the step S4). The sample 1 includes the reference portion 11 and the deformation portion 13 coupled to the reference portion 11 via the coupling portion 12. The deformation amount of the sample 1 is a difference value between the dimension of the reference portion 11 and the dimension of the deformation portion 13 in the separated sample 1.

Thus, the dimensional quality evaluation method of this embodiment is different from the method of using the conventional comb teeth specimen C, and even when the baseplate 3 itself is not cut, the deformation amount of the sample 1 can be accurately measured. This eliminates the need for the complicated step of cutting the baseplate 3 and need not dispose of the baseplate 3. This allows using the baseplate 3 for the additive manufacturing again and the continuous use of the manufacturing device. In addition, the dimensional quality evaluation method of this embodiment can consider the influence on the dimensional quality by various factors, such as the manufacturing condition, and evaluate the dimensional quality of the product 2. Accordingly, the dimensional quality evaluation method of this embodiment can easily and accurately evaluate the dimensional quality of the additively manufactured object.

Further, in the dimensional quality evaluation method of this embodiment, the reference portion 11 forms the block body with the flat surface and the deformation portion 13 is disposed at the side of the reference portion 11. The upper surface 11a of the reference portion 11 is additively manufactured substantially parallel to the baseplate 3. The upper surface 13a of the deformation portion 13 is additively manufactured to have the height substantially same as the upper surface 11a of the reference portion 11 and is additively manufactured to have the area smaller than the upper surface 11a of the reference portion 11. The deformation amount of the sample 1 is the difference value between the height of the upper surface 11a of the reference portion 11 and the height of the upper surface 13a of the deformation portion 13 in the separated sample 1.

Thus, even when the bottom surface 11b of the reference portion 11 is not parallel to the xy plane, the dimensional quality evaluation method of this embodiment can calculate the inclination of the sample 1 from the measurement data of the height of the upper surface 11a of the reference portion 11, estimate the measurement error of the height of the deformation portion 13, and correct the deformation amount of warpage of the deformation portion 13. In addition, the dimensional quality evaluation method of this embodiment can accurately measure the deformation amount of the sample 1 using the existing comparatively simple measurement device as illustrated in Fig. 9. Accordingly, the dimensional quality evaluation method of this embodiment can further easily and accurately evaluate the dimensional quality of the additively manufactured object.

Further, as illustrated in Fig. 6, in the dimensional quality evaluation method of this embodiment, in the cross-sectional surface of the reference portion 11, the reference portion 11 has the angle At formed by the upper surface 11a and the side surface 11c of 90 degrees or more, and the angle Ab formed by the bottom surface 11b and the side surface 11c of the reference portion 11 of 90 degrees or less.

Thus, in the dimensional quality evaluation method of this embodiment, in the middle of the additive manufacturing of the reference portion 11, the heat conduction path from the stacked uppermost surface to the baseplate 3 is possibly the cross-sectional area of the uppermost surface or more. Accordingly, in the dimensional quality evaluation method of this embodiment, since the flatness of the upper surface 11a of the reference portion 11 can be properly kept after the additive manufacturing, the deformation amount of the sample 1 can be accurately measured. Accordingly, the dimensional quality evaluation method of this embodiment allows further easily and accurately evaluating the dimensional quality of the additively manufactured object.

Further, in the dimensional quality evaluation method of this embodiment, the additively manufactured deformation portion 13 includes the column portion 132 extending upward from the baseplate 3, the beam portion 131 extending from the column portion 132 along the baseplate 3, and the support portion 133 extending downward from the beam portion 131 to the baseplate 3 and supports the beam portion 131. The support portion 133 has the voids 134 communicating the beam portion 131 and the baseplate 3. The side surface 132a of the column portion 132 is coupled to the side surface 11c of the reference portion 11.

Thus, with the dimensional quality evaluation method of this embodiment, the shape of the deformation portion 13 can be the shape similar to the conventional comb teeth specimen C. Accordingly, the dimensional quality evaluation method of this embodiment utilizes modeling data of simulation analysis used to evaluate the dimensional quality of the product 2 using the conventional comb teeth specimen C and knowledge of the analysis result and the like to allow evaluating the dimensional quality of the product 2. Accordingly, the dimensional quality evaluation method of this embodiment allows further easily and accurately evaluating the dimensional quality of the additively manufactured object.

### <Dimensional Quality Evaluation System>

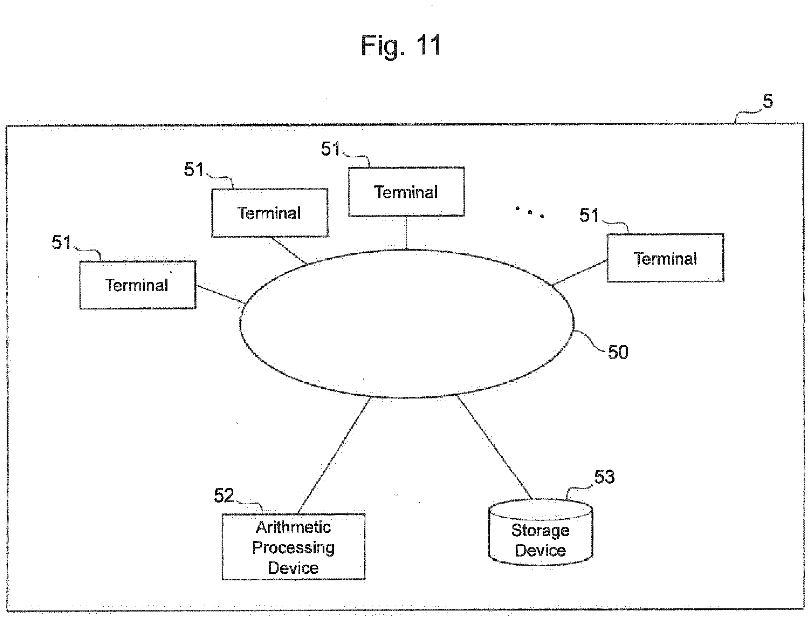

Fig. 11 is a drawing illustrating a configuration of a dimensional quality evaluation system 5 of Embodiment 1.

The dimensional quality evaluation system 5 of this embodiment is a system that evaluates the dimensional quality of the product 2 additively manufactured on the baseplate 3. The dimensional quality evaluation system 5 includes one or a plurality of terminals 51, an arithmetic processing device 52, and a storage device 53, and they are communicatively connected to one another via a communication network 50.

The communication network 50 is a wired or wireless communication network that allows transmitting and receiving digital data. The communication network 50, for example, may be constituted including a data transmission path (a bus), an Internet network, a carrier network, and the like in one computer. The terminal 51 is an electronic device having an input function, an output function, and a communication function. The arithmetic processing device 52 is a computer including a CPU. The storage device 53 is a computer including a memory, such as a hard disk drive or a solid state drive. One terminal 51 and the arithmetic processing device 52 may be included in one computer. The arithmetic processing device 52 and the storage device 53 may be included in one computer.

A user of the dimensional quality evaluation system 5 inputs user information, the kind of the manufacturing material used for additively manufacturing the product 2 and the sample 1 at the step S1, and the deformation amount of the sample 1 measured at the step S3 to the terminal 51 and accesses the arithmetic processing device 52 from the terminal 51. That is, the terminal 51 acquires the deformation amount of the sample 1 between before and after being separated from the baseplate 3, and the sample 1 is additively manufactured simultaneously with the product 2 on the baseplate 3 where the product 2 is additively manufactured. The terminal 51 transmits the user information, the kind of the manufacturing material, and the deformation amount of the sample 1 to the arithmetic processing device 52.

The arithmetic processing device 52 stores the kind of the manufacturing material and the deformation amount of the sample 1 transmitted from the terminal 51 to a storage region of the storage device 53 assigned for each user information. The storage device 53 preliminarily stores the dimensional quality determination table T1 that determines the correspondence relationship between the kind of the manufacturing material, the deformation amount of the sample 1, and the grade of the dimensional quality. The arithmetic processing device 52 reads the dimensional quality determination table T1 from the storage device 53. The arithmetic processing device 52 determines the grade of the dimensional quality corresponding to the kind of the manufacturing material and the deformation amount of the sample 1 transmitted from the terminal 51 using the dimensional quality determination table T1. Accordingly, the arithmetic processing device 52 evaluates the dimensional quality of the additive manufacturing batch additively manufactured at the step S1. That is, the arithmetic processing device 52 evaluates the dimensional quality of the product 2 based on the deformation amount of the sample 1 transmitted from the terminal 51. The arithmetic processing device 52 transmits the evaluation result of the dimensional quality to the terminal 51. The terminal 51 displays the evaluation result transmitted from the arithmetic processing device 52. Thus, the user can confirm the evaluation result displayed on the terminal 51.

Note that the user can request that a plurality of pieces of data regarding the deformation amount of the sample 1 are compared and displayed from the terminal 51 to the arithmetic processing device 52. The arithmetic processing device 52 to which this request has been transmitted reads data allowed to open to public to the user from the storage device 53 and transmits it to the terminal 51 in a predetermined format. The terminal 51 displays the result of comparison of the plurality of pieces of data regarding the deformation amount of the sample 1 transmitted from the arithmetic processing device 52. Thus, the user confirms the comparison result displayed on the terminal 51 to allow confirming trend of the deformation amount of the sample 1.

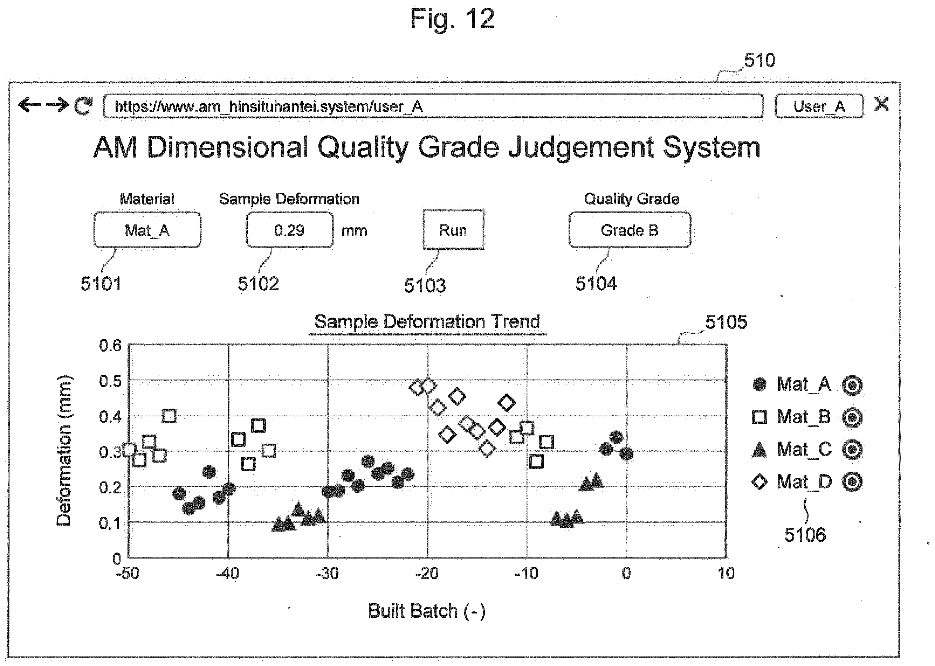

Fig. 12 is a drawing illustrating an example of a screen 510 displayed on the terminal 51 illustrated in Fig. 11.

The screen 510 illustrated in Fig. 12 is a screen of a web application that performs input/output and an operation using a web browser in the terminal 51. Specifically, the screen 510 illustrated in Fig. 12 is displayed after being connected to a predetermined web address and login using the preliminarily registered user information.

The screen 510 illustrated in Fig. 12 includes an entry field 5101 of the kind of the manufacturing material, an entry field 5102 of the deformation amount of the sample 1, an evaluation execution button 5103, and a display field 5104 of the evaluation result of the dimensional quality. Further, the screen 510 includes a data display field 5105 for comparing the plurality of pieces of data regarding the deformation amount of the sample 1 stored in the storage device 53 and displaying it and a filter 5106 for selecting data displayed on the data display field 5105.

In the example of Fig. 12, a display format of a graph in the data display field 5105 is a format of a distribution diagram (scattering plot). However, it may be other formats, such as a polygonal line drawing, a bar chart, or a frequency distribution drawing, or may be combination of them. In the example of Fig. 12, a display format of the data in the data display field 5105 is a graph format, but it may be a table format or both formats of a graph and a table. A display format of the data in the data display field 5105 may be switched by an operation of the user. In the example of Fig. 12, when the user operates the evaluation execution button 5103, information is displayed simultaneously on both of the display field 5104 of the dimensional quality of the evaluation result and the data display field 5105. However, the evaluation execution button 5103 may be divided and the information may be displayed on both separately.

As described above, the dimensional quality evaluation system 5 of this embodiment is a system that evaluates the dimensional quality of the product 2 additively manufactured on the baseplate 3. The dimensional quality evaluation system 5 includes the terminal 51 that acquires the deformation amount of the sample 1 between before and after being separated from the baseplate 3, and the sample 1 is additively manufactured simultaneously with the product 2 (that is, in the same additive manufacturing batch) on the baseplate 3 where the product 2 is additively manufactured. The dimensional quality evaluation system 5 includes the arithmetic processing device 52 that is communicatively connected to the terminal 51 and evaluates the dimensional quality of the product 2 based on the deformation amount of the sample 1 transmitted from the terminal 51. The sample 1 includes the reference portion 11 and the deformation portion 13 coupled to the reference portion 11. The deformation amount of the sample 1 is the difference value between the dimension of the reference portion 11 and the dimension of the deformation portion 13 in the separated sample 1.

Thus, the dimensional quality evaluation system 5 of this embodiment is different from the method of using the conventional comb teeth specimen C, and even when the baseplate 3 itself is not cut, the dimensional quality of the product 2 can be evaluated based on the accurately measured deformation amount of the sample 1. This eliminates the need for the complicated step of cutting the baseplate 3 and need not dispose of the baseplate 3. This allows using the baseplate 3 for the additive manufacturing again and the continuous use of the manufacturing device. In addition, the dimensional quality evaluation system 5 of this embodiment can consider the influence on the dimensional quality by various factors, such as the manufacturing condition, and evaluate the dimensional quality of the product 2. Accordingly, the dimensional quality evaluation system 5 of this embodiment can easily and accurately evaluate the dimensional quality of the additively manufactured object.

Further, the dimensional quality evaluation system 5 of this embodiment further includes the storage device 53 communicatively connected to the arithmetic processing device 52. The terminal 51 further acquires the kind of the manufacturing material used for additively manufacturing the product 2 and the sample 1. The storage device 53 preliminarily stores the dimensional quality determination table T1 that determines the correspondence relationship between the kind of the manufacturing material, the deformation amount of the sample 1, and the grade of the dimensional quality. The arithmetic processing device 52 determines the grade of the dimensional quality corresponding to the kind of the manufacturing material and the deformation amount of the sample 1 transmitted from the terminal 51 using the dimensional quality determination table T1 to evaluate the dimensional quality of the product 2.

Thus, the arithmetic processing device 52 of this embodiment can accurately evaluate the dimensional quality of the product 2 without using a complicated evaluation algorithm. Accordingly, the dimensional quality evaluation system 5 of this embodiment can further easily and accurately evaluate the dimensional quality of the additively manufactured object.

### [Embodiment 2]

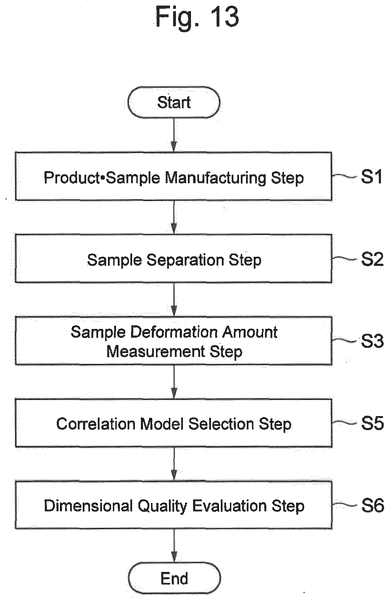

Using Fig. 13 to Fig. 18, a dimensional quality evaluation method for an additively manufactured object and an evaluation system therefor according to Embodiment 2 are described. Description of a configuration and an operation of the dimensional quality evaluation method and the evaluation system therefor of Embodiment 2 similar to those of Embodiment 1 is omitted.

Fig. 13 is a drawing depicting a whole step of the dimensional quality evaluation method of Embodiment 2.

The dimensional quality evaluation method of Embodiment 2 includes the step S1 to the step S3 similar to Embodiment 1. Further, the dimensional quality evaluation method of Embodiment 2 includes a step S5 of selecting a correlation model that predicts the correlation relationship between the deformation amount of the product 2 and the deformation amount of the sample 1 and a step S6 of evaluating the dimensional quality of the product 2 based on the deformation amount of the sample 1. The step S5 is a step that does not exist in the dimensional quality evaluation method of Embodiment 1. The step S6 is a step having content different from the step S4 of Embodiment 1.

### <Step S5 and Correlation Model>

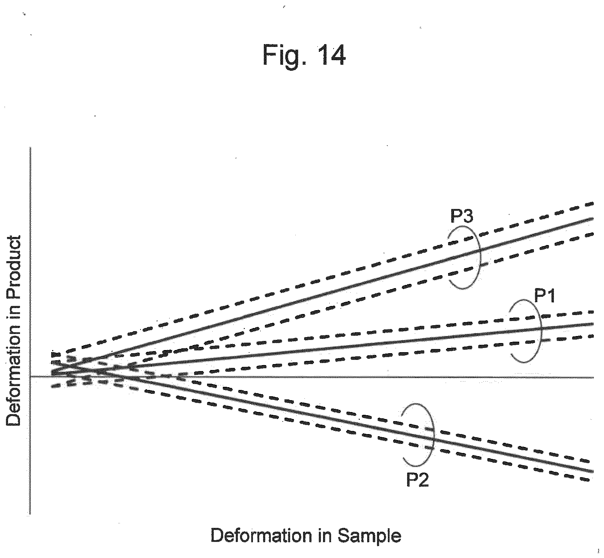

Fig. 14 is a drawing illustrating an example of the correlation model.

At the step S5 of selecting the correlation model, the correlation model that predicts the correlation relationship between the deformation amount of the product 2 whose dimensional quality is desired to be evaluated and the deformation amount of the sample 1 additively manufactured simultaneously with the product 2 is selected.

The correlation model is not the model that predicts the correlation relationship between the deformation amount of the product 2 and the deformation amount of the sample 1, but may be a model that predicts a correlation relationship between an index regarding the dimensional quality of the product 2 and the deformation amount of the sample 1. Examples of the index regarding the dimensional quality of the product 2 include the dimension of the product 2, the dimensional error of the product 2, and the grade of the dimensional quality of the product 2.

The horizontal axis of Fig. 14 indicates the deformation amount of the sample 1, and the vertical axis of Fig. 14 indicates a predicted value of the deformation amount of the product 2. A reference numeral P1 in Fig. 14 indicates a correlation model that predicts a correlation relationship between a deformation amount of a product P1 and a deformation amount of the sample 1 additively manufactured simultaneously with the product P1. A reference numeral P2 in Fig. 14 indicates a correlation model that predicts a correlation relationship between a deformation amount of a product P2 and a deformation amount of the sample 1 additively manufactured simultaneously with the product P2. A reference numeral P3 in Fig. 14 indicates a correlation model that predicts a correlation relationship between a deformation amount of a product P3 and a deformation amount of the sample 1 additively manufactured simultaneously with the product P3.

The solid line in Fig. 14 indicates the predicted value of the deformation amount of the product 2 corresponding to the deformation amount of the sample 1. The dashed line in Fig. 14 indicates an error range of the predicted value of the deformation amount of the product 2. The error range of the predicted value of the deformation amount of the product 2 is, for example, a range twice a standard deviation σ. An error range of 2σ is a range of including a true value at a probability of 95% when the error is assumed to have a normal distribution.

The correlation model as described above is made to correspond to the kind of the product 2 and preliminarily stored. At the step S5, a correlation model made to correspond to the kind of the product 2 closest to the product 2 whose dimensional quality is desired to be evaluated is selected.

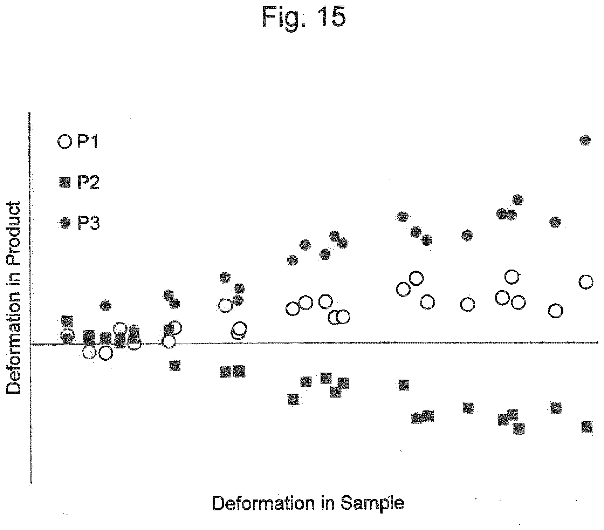

Fig. 15 is a drawing describing a method of establishing the correlation model illustrated in Fig. 14.

One method of establishing the correlation model is a method of performing regression analysis on the measurement value of each of the deformation amounts of the product 2 and the sample 1 and establishes the correlation model. For example, one or the plurality of products 2 manufactured simultaneously with the sample 1 is selected, the deformation amount of the sample 1 is measured, the deformation amount of the product 2 is measured, and the regression analysis is performed on the measurement value of each of the deformation amounts to allow establishing the correlation model.

The horizontal axis in Fig. 15 indicates the measurement value of the deformation amount of the sample 1 and the vertical axis in Fig. 15 indicates the measurement values of the deformation amounts of the products P1 to P3. As long as the manufacturing material is the same, the sample 1 and the plurality of kinds of the products 2 may be simultaneously manufactured and the respective deformation amounts may be measured. Thus, data required to establish the correlation model can be collected with a comparatively small man-hour.

An example of the kind of the regression analysis used for establishing the correlation model includes a least-square method, a lasso regression method, a ridge regression method, a kernel ridge regression method, a support vector regression method, or a neural network regression.

Another method of establishing the correlation model is a method that performs regression analysis on a result of thermal distortion simulation of the additive manufacturing and establishes the correlation model. For example, the thermal distortion is performed using a simulation model that reproduces each shape of the sample 1 and the product 2, acquires each deformation amount of the sample 1 and the product 2 from the result, and performs regression analysis on each of the acquired deformation amounts to allow establishing the correlation model. Further, both of the measurement value of each deformation amount of the product 2 and the sample 1 and the simulation result can be combined to establish the correlation model.

### <Step S6>

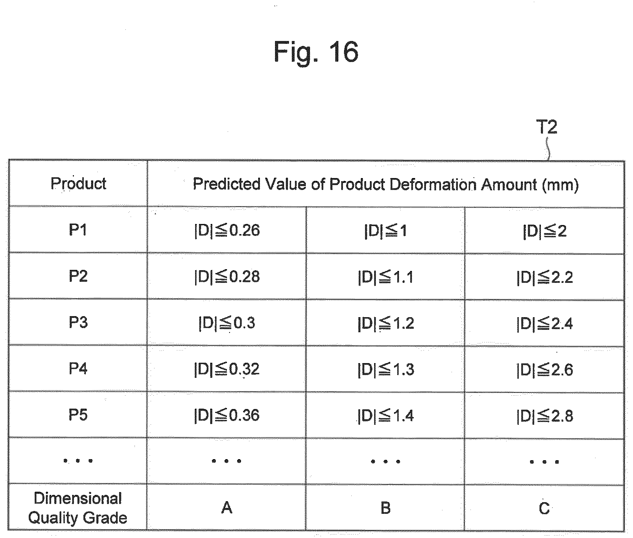

Fig. 16 is a drawing illustrating a dimensional quality determination table T2 of Embodiment 2.

At the step S6, the measured deformation amount of the sample 1 is input to the selected correlation model, the predicted value of the deformation amount of the product 2 is calculated, and the dimensional quality of the product 2 is evaluated based on the calculated predicted value.

Specifically, at the step S6, using the dimensional quality determination table T2 illustrated in Fig. 16, the grade of the dimensional quality of the product 2 is determined to evaluate the dimensional quality of the product 2. The dimensional quality determination table T2 is a table that determines a correspondence relationship between the kind of the product 2, the predicted value of the deformation amount of the product 2, and the grade of the dimensional quality of the product 2. In the dimensional quality determination table T2, the deformation amount of the product 2 as the determination reference of the grade of the dimensional quality may be a value preliminarily determined by the user. The deformation amount of the product 2 as the determination reference of the grade of the dimensional quality can be determined by the human or the computer based on the deformation amounts of the plurality of products 2.

Note that at the step S6, without using the dimensional quality determination table T2, the dimensional quality of the product 2 may be evaluated. For example, at the step S6, not the grade of the dimensional quality, but the predicted value of the deformation amount of the product 2 calculated from the correlation model may be scored to evaluate the dimensional quality of the product 2.

As described above, the dimensional quality evaluation method of Embodiment 2 further includes selecting the correlation model that predicts the correlation relationship between the deformation amount of the product 2 between before and after separating the additively manufactured object 2 from the baseplate 3 and the deformation amount of the sample 1 (the step S5). Evaluating the dimensional quality of the product 2 (the step S6) is to input the measured deformation amount of the sample 1 to the selected correlation model, calculate the predicted value of the deformation amount of the product 2, and evaluate the dimensional quality of the product 2 based on the calculated predicted value.

Thus, the dimensional quality evaluation method of Embodiment 2 can consider not only the factor other than the design shape of the product 2 but also the influence on the dimensional quality by the factor of the design shape of the product 2 and evaluate the dimensional quality of the product 2. Accordingly, the dimensional quality evaluation method of Embodiment 2 allows further easily and accurately evaluating the dimensional quality of the additively manufactured object.

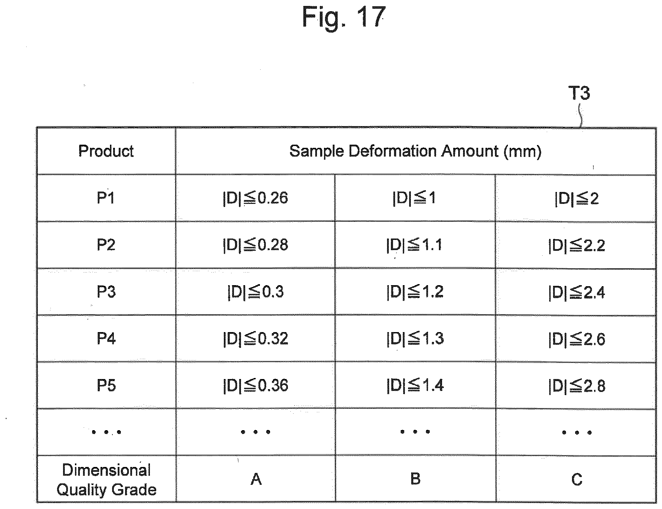

Fig. 17 is a drawing illustrating a dimensional quality determination table T3 different from Fig. 16.

Note that in the dimensional quality evaluation method described above, explicitly using the correlation model, the step S5 and the step S6 are dividedly performed. However, at the step S6 of Embodiment 2, use of the dimensional quality determination table T3 allows directly determining the grade of the dimensional quality of the product 2 from the measured deformation amount of the sample 1. Specifically, at the step S6 of Embodiment 2, the grade of the dimensional quality corresponding to the kind of the product 2 and the deformation amount of the sample 1 is determined using the dimensional quality determination table T3 to allow evaluating the dimensional quality of the product 2.

The dimensional quality determination table T3 illustrated in Fig. 17 is a table that determines a correspondence relationship between the kind of the product 2, the deformation amount of the sample 1, and the grade of the dimensional quality of the product 2. Meanwhile, the dimensional quality determination table T2 illustrated in Fig. 16 is the table that determines the correspondence relationship between the predicted value of the deformation amount of the product 2 and the grade of the dimensional quality. In the dimensional quality determination table T3 illustrated in Fig. 17, the deformation amount of the sample 1 as the determination reference of the grade of the dimensional quality can be determined by determining the deformation amount of the product 2 corresponding to the grade of the dimensional quality of the product 2 and calculating the deformation amount of the sample 1 corresponding to the deformation amount of the product 2 using the relevant correlation model. In this respect, the deformation amount of the sample 1 corresponding to the deformation amount of the product 2 can be calculated by calculating an inverse function of the relevant correlation model and inputting the calculated deformation amount of the product 2 to an inverse function of the correlation model. That is, the dimensional quality determination table T3 can be generated by inputting the deformation amount of the product 2 corresponding to the grade of the dimensional quality of the product 2 to the inverse function of the correlation model and calculating the deformation amount of the sample 1 corresponding to the input deformation amount of the product 2. Alternatively, the deformation amount of the sample 1 corresponding to the deformation amount of the product 2 can be easily calculated from the result of the thermal distortion simulation described above.

By the use of the dimensional quality determination table T3, in the dimensional quality evaluation method of Embodiment 2, even when the predicted value of the deformation amount of the product 2 is not calculated using the correlation model, the grade of the dimensional quality of the product 2 can be directly determined from the deformation amount of the sample 1. Accordingly, the dimensional quality evaluation method of Embodiment 2 using the dimensional quality determination table T3 can evaluate the dimensional quality of the product 2 easier than the case of using the dimensional quality determination table T2.

### <Dimensional Quality Evaluation System>

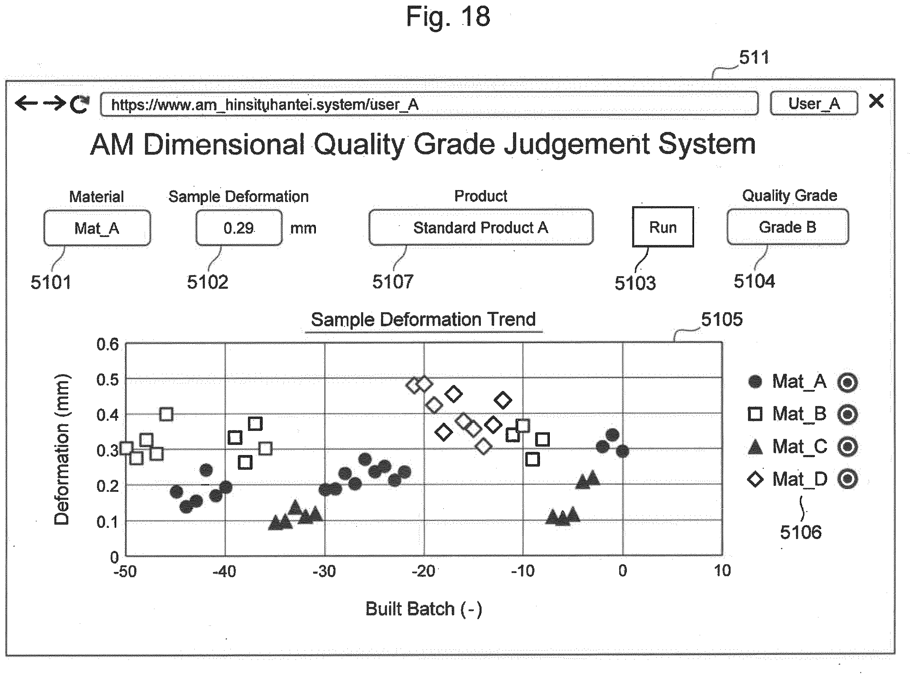

Fig. 18 is a drawing illustrating an example of a screen 511 displayed on the terminal 51 of Embodiment 2.

The dimensional quality evaluation system 5 of Embodiment 2, similarly to Embodiment 1, includes one or the plurality of terminals 51, the arithmetic processing device 52, and the storage device 53, and they are communicatively connected to one another via the communication network 50.

The user of the dimensional quality evaluation system 5 of Embodiment 2 inputs the kind of the product 2, in addition to the user information, the kind of the manufacturing material, and the deformation amount of the sample 1 to the terminal 51 and accesses the arithmetic processing device 52 from the terminal 51. That is, the terminal 51 acquires the user information, the kind of the manufacturing material, the kind of the product 2, and the deformation amount of the sample 1. The terminal 51 transmits the user information, the kind of the manufacturing material, the kind of the product 2, and the deformation amount of the sample 1 to the arithmetic processing device 52.

The arithmetic processing device 52 stores the kind of the manufacturing material, the kind of the product 2, and the deformation amount of the sample 1 transmitted from the terminal 51 to the storage region of the storage device 53 assigned for each user information. The storage device 53 preliminarily stores the correlation model that predicts the correlation relationship between the deformation amount of the product 2 and the deformation amount of the sample 1 for each kind of the manufacturing materials of the product 2. The storage device 53 preliminarily stores the dimensional quality determination table T2 that determines the correspondence relationship between the kind of the product 2, the predicted value of the deformation amount of the product 2, and the grade of the dimensional quality of the product 2 for each kind of the manufacturing materials. The arithmetic processing device 52 reads the correlation model corresponding to the kind of the product 2 and the kind of the manufacturing material transmitted from the terminal 51 from the storage device 53. The arithmetic processing device 52 inputs the deformation amount of the sample 1 transmitted from the terminal 51 to the read correlation model and calculates the predicted value of the deformation amount of the product 2. The arithmetic processing device 52 reads the dimensional quality determination table T2 corresponding to the kind of the manufacturing material transmitted from the terminal 51 from the storage device 53. The arithmetic processing device 52 determines the grade of the dimensional quality corresponding to the kind of the product 2 transmitted from the terminal 51 and the calculated predicted value of the deformation amount of the product 2 using the dimensional quality determination table T2. Accordingly, the arithmetic processing device 52 evaluates the dimensional quality of the dimensional quality of the product 2. That is, the arithmetic processing device 52 evaluates the dimensional quality of the product 2 based on the predicted value of the deformation amount of the product 2 calculated by the correlation model. The arithmetic processing device 52 transmits the evaluation result of the dimensional quality to the terminal 51. The terminal 51 displays the evaluation result transmitted from the arithmetic processing device 52. The user can confirm the evaluation result displayed on the terminal 51.

A screen 511 illustrated in Fig. 18 differs in addition of an entry field 5107 of the kind of the product 2. Further, the screen 511 illustrated in Fig. 18, compared with the screen 510 illustrated in Fig. 12, differs in that the evaluation result of the dimensional quality displayed on the display field 5104 is the grade of the dimensional quality of the product 2.

As described above, the dimensional quality evaluation system 5 of Embodiment 2 further acquires the kind of the product 2 by the terminal 51. The storage device 53 preliminarily stores the correlation model that predicts the correlation relationship between the deformation amount of the product 2 and the deformation amount of the sample 1 between before and after separating the additively manufactured object 2 from the baseplate 3 for each kind of the products 2. The arithmetic processing device 52 inputs the deformation amount of the sample 1 transmitted from the terminal 51 to the correlation model corresponding to the kind of the product 2 transmitted from the terminal 51, calculates the predicted value of the deformation amount of the product 2, and evaluates the dimensional quality of the product 2 based on the calculated predicted value.

Thus, the dimensional quality evaluation system 5 of Embodiment 2 can consider not only the factor other than the design shape of the product 2 but also the influence on the dimensional quality by the factor of the design shape of the product 2 and evaluate the dimensional quality of the product 2. Accordingly, the dimensional quality evaluation system 5 of Embodiment 2 allows further easily and accurately evaluating the dimensional quality of the additively manufactured object.

Further, the dimensional quality evaluation system 5 of Embodiment 2 preliminarily stores the dimensional quality determination table T2 that determines the correspondence relationship between the kind of the product 2, the predicted value of the deformation amount of the product 2, and the grade of the dimensional quality of the product 2 in the storage device 53. The arithmetic processing device 52 determines the grade of the dimensional quality corresponding to the kind of the product 2 transmitted from the terminal 51 and the calculated predicted value of the deformation amount of the product 2 using the dimensional quality determination table T2 to evaluate the dimensional quality of the product 2.

Thus, the dimensional quality evaluation system 5 of Embodiment 2 can accurately evaluate the dimensional quality of the product 2 without using a complicated evaluation algorithm. Accordingly, the dimensional quality evaluation system 5 of Embodiment 2 can further easily and accurately evaluate the dimensional quality of the additively manufactured object.

Note that the dimensional quality evaluation system 5 of Embodiment 2 may preliminarily store the dimensional quality determination table T3 that determines the correspondence relationship between the kind of the product 2, the deformation amount of the sample 1, and the grade of the dimensional quality of the product 2 by the storage device 53. The arithmetic processing device 52 may determine the grade of the dimensional quality corresponding to the kind of the product 2 and the deformation amount of the sample 1 transmitted from the terminal 51 using the dimensional quality determination table T3 to evaluate the dimensional quality of the product 2.

Thus, the arithmetic processing device 52 of Embodiment 2 can directly determine the grade of the dimensional quality of the product 2 from the deformation amount of the sample 1 without calculating the predicted value of the deformation amount of the product 2 using the correlation model stored in the storage device 53. Accordingly, the arithmetic processing device 52 of Embodiment 2 can reduce a processing load when the dimensional quality of the product 2 is evaluated compared with the case of using the dimensional quality determination table T2. Accordingly, the dimensional quality evaluation system 5 of Embodiment 2 can further easily and accurately evaluate the dimensional quality of the additively manufactured object.

### [Embodiment 3]

A dimensional quality evaluation method for an additively manufactured object and an evaluation system therefor according to Embodiment 3 are described. Description of a configuration and an operation of the dimensional quality evaluation method and the evaluation system therefor of Embodiment 3 similar to those of Embodiment 1 or Embodiment 2 is omitted.

The dimensional quality evaluation method of Embodiment 3 includes a step of acquiring a dimensional difference between the reference portion 11 and the deformation portion 13 of the additively manufactured sample 1 between the step S1 and the step S2. That is, the dimensional quality evaluation method of Embodiment 3 includes the step of acquiring the dimensional difference between the reference portion 11 and the deformation portion 13 in the sample 1 before separated from the baseplate 3. Specifically, in the step, using the measurement device 4, the height of the upper surface 11a of the reference portion 11 and the height of the upper surface 13a of the deformation portion 13 are measured in the sample 1 before being separated. The measurement value of the height of the upper surface 11a of the reference portion 11 is subtracted from the measurement value of the height of the upper surface 13a of the deformation portion 13. Thus, at the step, the dimensional difference between the reference portion 11 and the deformation portion 13 in the sample 1 before being separated can be acquired.

Further, the dimensional quality evaluation method of Embodiment 3 is different from Embodiment 1 and Embodiment 2 in the content of the step 3. In the step 3 of Embodiment 3, by measuring the difference value between the dimensional difference between the reference portion 11 and the deformation portion 13 in the sample 1 before being separated and the dimensional difference between the reference portion 11 and the deformation portion 13 in the separated sample 1, the deformation amount of the sample 1 is measured. Specifically, in the step 3 of Embodiment 3, using the above-described measurement device 4, in the separated sample 1, the height of the upper surface 11a of the reference portion 11 and the height of the upper surface 13a of the deformation portion 13 are measured. By subtracting the measurement value of the height of the upper surface 11a of the reference portion 11 from the measurement value of the height of the upper surface 13a of the deformation portion 13, the dimensional difference between the reference portion 11 and the deformation portion 13 in the separated sample 1 is acquired. The dimensional difference in the sample 1 before being separated is subtracted from the dimensional difference in the separated sample 1. Thus, in the step 3 of Embodiment 3, the difference value between the dimensional difference between the reference portion 11 and the deformation portion 13 in the sample 1 before being separated and the dimensional difference between the reference portion 11 and the deformation portion 13 in the separated sample 1 can be acquired.

Thus, with the dimensional quality evaluation method of Embodiment 3, even when the height of the upper surface 11a of the reference portion 11 of the sample 1 and the height of the upper surface 13a of the deformation portion 13 are not additively manufactured to the same height, the deformation amount of the sample 1 can be accurately measured. Accordingly, the dimensional quality evaluation method of Embodiment 3 allows further easily and accurately evaluating the dimensional quality of the additively manufactured object.

In the dimensional quality evaluation system 5 of Embodiment 3, the deformation amount of the sample 1 input to the terminal 51 is, as in the step 3 of Embodiment 3, the difference value between the dimensional difference between the reference portion 11 and the deformation portion 13 in the sample 1 before being separated and the dimensional difference between the reference portion 11 and the deformation portion 13 in the separated sample 1.

Thus, with the dimensional quality evaluation system 5 of Embodiment 3, even when the height of the upper surface 11a of the reference portion 11 and the height of the upper surface 13a of the deformation portion 13 of the sample 1 are not additively manufactured to the same height, the deformation amount of the sample 1 can be accurately measured, and therefore the dimensional quality of the additively manufactured object can be further easily and accurately evaluated.

### [Others]

Further, the present invention is not limited to the above embodiments, and various modifications may be contained. For example, the above-described embodiments of the present invention have been described in detail in a clearly understandable way, and are not necessarily limited to those having all the described configurations. In addition, some of the configurations of a certain embodiment can be replaced with the configurations of the other embodiments, and the configurations of the other embodiments can be added to the configurations of the certain embodiment. In addition, some of the configurations of each embodiment can be added to, omitted, and replaced with other configurations.

Each of the above configurations, functions, processing units, processing means, and the like may be partially or entirely achieved by hardware by, for example, designing by an integrated circuit. In addition, each of the configurations, functions, and the like may be achieved in software such that a processor interprets and executes a program that achieves each function. Information, such as a program, a table, and a file for achieving each function, can be stored in a recording device, such as a memory, a hard disk, and a solid state drive (SSD), or a recording medium, such as an IC card, an SD card, and a DVD.

In addition, only control lines and information lines considered to be necessary for explanation are described, but not all the control lines and the information lines for a product are described. In practice, almost all the configurations may be considered to be connected to one another.

### Reference Signs List

- 1: Sample
- 11: Reference portion
- 11a: Upper surface
- 11b: Bottom surface
- 11c: Side surface
- 12: Coupling portion
- 13: Deformation portion
- 13a: Upper surface
- 131: Beam portion
- 132: Column portion
- 132a: Side surface
- 133: Support portion
- 134: Void
- 2: Product
- 3: Baseplate
- 5: Dimensional quality evaluation system
- 51: Terminal
- 52: Arithmetic processing device
- 53: Storage device
- T1, T2, T3: Dimensional quality determination table

## Claims

1. A dimensional quality evaluation method for evaluating a dimensional quality of an additively manufactured object additively manufactured on a baseplate, comprising:
a step of additively manufacturing a sample for evaluating the dimensional quality of the additively manufactured object in an additive manufacturing batch same as the additively manufactured object on the baseplate where the additively manufactured object is additively manufactured;
a step of acquiring a dimensional difference between a reference portion and a deformation portion of the additively manufactured sample;
a step of separating the additively manufactured sample from the baseplate;
a step of measuring a dimension of the separated sample to measure a deformation amount of the sample between before and after being separated from the baseplate; and
a step of evaluating the dimensional quality of the additively manufactured object based on the measured deformation amount of the sample,
wherein the deformation amount of the sample is a difference value between a dimensional difference between the reference portion and the deformation portion in the sample before being separated and a dimensional difference between the reference portion and the deformation portion in the separated sample.

2. The dimensional quality evaluation method for the additively manufactured object according to claim 1,
wherein the reference portion forms a block body with a flat surface,
wherein the deformation portion is disposed at a side of the reference portion,
wherein an upper surface of the reference portion is additively manufactured substantially parallel to the baseplate,
wherein an upper surface of the deformation portion is additively manufactured to have a height substantially same as the upper surface of the reference portion and is additively manufactured to have an area smaller than the upper surface of the reference portion, and
wherein the deformation amount of the sample is a difference value between a dimensional difference between the height of the upper surface of the reference portion and the height of the upper surface of the deformation portion in the sample before being separated and a dimensional difference between the height of the upper surface of the reference portion and the height of the upper surface of the deformation portion in the separated sample.

3. The dimensional quality evaluation method for the additively manufactured object according to claim 2,
wherein in a cross-sectional surface of the reference portion:
an angle formed by the upper surface of the reference portion and a side surface of the reference portion is 90 degrees or more; and
an angle formed by a bottom surface of the reference portion and the side surface of the reference portion is 90 degrees or less.

4. The dimensional quality evaluation method for the additively manufactured object according to claim 2,
wherein the additively manufactured deformation portion includes:
a column portion extending upward from the baseplate;
a beam portion extending from the column portion substantially parallel to the baseplate; and
a support portion extending downward from the beam portion to the baseplate and supporting the beam portion,
wherein the support portion has a void communicating the beam portion and the baseplate, and
wherein a side surface of the column portion is coupled to a side surface of the reference portion,

5. The dimensional quality evaluation method for the additively manufactured object according to any one of claim 1 to claim 4, further comprising
a step of selecting a correlation model that predicts a correlation relationship between a deformation amount of the additively manufactured object between before and after separating the additively manufactured object that has been additively manufactured from the baseplate and the deformation amount of the sample,
wherein the step of evaluating the dimensional quality of the additively manufactured object is a step of inputting the measured deformation amount of the sample to the selected correlation model, calculating a predicted value of the deformation amount of the additively manufactured object, and evaluating the dimensional quality of the additively manufactured object based on the calculated predicted value.

6. A dimensional quality evaluation system for evaluating a dimensional quality of an additively manufactured object additively manufactured on a baseplate, comprising:
a terminal that acquires a deformation amount of a sample between before and after being separated from the baseplate, the sample being additively manufactured in an additive manufacturing batch same as the additively manufactured object on the baseplate where the additively manufactured object is additively manufactured; and
an arithmetic processing device that is communicatively connected to the terminal and evaluates the dimensional quality of the additively manufactured object based on the deformation amount of the sample transmitted from the terminal,
wherein the sample includes a reference portion and a deformation portion coupled to the reference portion, and
wherein the deformation amount of the sample is a difference value between a dimensional difference between the reference portion and the deformation portion in the sample before being separated and a dimensional difference between the reference portion and the deformation portion in the separated sample.

7. The dimensional quality evaluation system for the additively manufactured object according to claim 6, further comprising
a storage device communicatively connected to the arithmetic processing device,
wherein the terminal further acquires a kind of a manufacturing material used for additively manufacturing the additively manufactured object and the sample,
wherein the storage device preliminarily stores a dimensional quality determination table that determines a correspondence relationship between the kind of the manufacturing material, the deformation amount of the sample, and a grade of the dimensional quality, and
wherein the arithmetic processing device determines the grade of the dimensional quality corresponding to the kind of the manufacturing material and the deformation amount of the sample transmitted from the terminal using the dimensional quality determination table to evaluate the dimensional quality of the additively manufactured object.

8. The dimensional quality evaluation system for the additively manufactured object according to claim 6, further comprising
a storage device communicatively connected to the arithmetic processing device,
wherein the terminal further acquires a kind of the additively manufactured object,
wherein the storage device preliminarily stores a correlation model that predicts a correlation relationship between a deformation amount of the additively manufactured object and the deformation amount of the sample between before and after separating the additively manufactured object that has been additively manufactured from the baseplate for each kind of the additively manufactured objects, and
wherein the arithmetic processing device inputs the deformation amount of the sample transmitted from the terminal to the correlation model corresponding to the kind of the additively manufactured object transmitted from the terminal, calculates a predicted value of the deformation amount of the additively manufactured object, and evaluates the dimensional quality of the additively manufactured object based on the calculated predicted value.

9. The dimensional quality evaluation system for the additively manufactured object according to claim 8,
wherein the storage device preliminarily stores a dimensional quality determination table that determines a correspondence relationship between the kind of the additively manufactured object, the predicted value of the deformation amount of the additively manufactured object, and a grade of the dimensional quality, and
wherein the arithmetic processing device determines the grade of the dimensional quality corresponding to the kind of the additively manufactured object transmitted from the terminal and the calculated predicted value of the deformation amount of the additively manufactured object using the dimensional quality determination table to evaluate the dimensional quality of the additively manufactured object.
